# EUROPEAN PATENT APPLICATION

(11) **EP 2 669 305 A1**
(43) Date of publication of application: **04.12.2013**
(21) Application number: 12170573.5
(22) Date of filing: 01.06.2012
(51) Int. Cl.: C08G 59/02, C25B 1/04, C25B 1/16, C25B 1/26, C02F 1/461

(54) **Process for manufacturing an epoxy resin**

(71) Applicant: SOLVAY SA, 1120 Bruxelles (BE)
(72) Inventor: Delannoy, Vincent, 7030 Mons (BE)
(74) Representative: Vande Gucht, Anne

(57) **Abstract**

Process for manufacturing an epoxy resin, wherein a brine containing sodium chloride is generated in the said process, comprising electrolyzing said brine in order to produce hydrogen, chlorine and sodium hydroxide, and recycling at least one part of said hydrogen, chlorine and sodium hydroxide in the said process.

## Description

The present invention relates to a process for manufacturing an epoxy resin.

The present invention relates more specifically to a process for manufacturing an epoxy resin, where a brine is generated with the epoxy resin.

Epoxy resins may be used in "coating" applications or "structural" applications.

"Coating" applications may be found in the marine field (corrosion-resistant coating for boats, for example), in the field of metal containers (cans for food use, for example), in the coil coating field, and in the field of coatings for motor vehicles, to name but a few of them.

"Structural" applications may be found in the field of composites (reinforcing fibers based on glass, boron or graphite for example), in the civil engineering field, in the fields of floor coverings, of construction, of electrical laminates (printed circuits), of electrical and electronic applications (transformers and insulators, for example), of adhesives, and of tooling (prototypes and moulds, for example), to name but a few of them.

Industrial processed for manufacturing epoxy resins produce usually brine as co-product which are to be treated or disposed off.

International application WO 2009/026208 discloses treatments for brines generated in epoxy resins manufacture and their use in other processes like chlor-alkali electrolysis. While such use appears to be attractive, opportunities for improvement remain, in particular, for the valorisation of the products issued from said use.

The present invention therefore relates to a process for manufacturing an epoxy resin, wherein a brine containing sodium chloride is generated in the said process, comprising electrolyzing said brine in order to produce hydrogen, chlorine and sodium hydroxide, and recycling at least one part of said hydrogen, chlorine and sodium hydroxide in the said process.

One of the essential features of the present invention lies in the recycling of the products generated in the brine electrolysis, in the manufacture of the epoxy resin, with the following advantages :
■ No need for an outlet for the products resulting from the electrolysis;
■ Avoidance of handling, transportation and storage of dangerous chemicals, like chlorine, hydrogen and concentrated sodium hydroxide ;
■ Minimal amount of chloride waste (e.g. sodium chloride) to be disposed off;
■ Minimal amount of fresh raw materials containing sodium and chloride and of basic compound to be fed to the process ;
■ Close to zero-effluent epoxy resin manufacturing process.

That process could therefore provide an economical solution to the classical process by avoiding investing in waste treatment units, safety equipment for the handling of dangerous chemicals and by reducing the consumption of raw materials.

In the process according to the invention, the expression "epoxy resin" is understood to mean a monomer or a polymer, the chemical formula of which contains at least one 2,3-epoxypropyloxy group. The epoxy resin is preferably a polymer.

Examples of monomers are for instance, monoglycidyl ethers, polyglycidyl ethers, or a mixture thereof. The polyglycidyl ether can be a diglycidyl ether, like the diglycidyl ether of bisphenol A (DGEBA) or the diglycidyl ether of isosorbide (diglycidylether of 1,4:3,6-dianhydro-D-sorbitol) for instance.

The term "polymer" is understood to mean molecules comprising several units joined to one another by covalent bonds, often in a repeating manner, these units being referred to as repeating units. The number of repeating units is greater than zero. A polymer contains at least one type of repeating unit. When the polymer contains only a single type of repeating unit, it is known as a homopolymer. When the polymer contains more than a single type of repeating unit, it is known as a copolymer. The copolymer may be of statistical, alternating or block type, as described in "Polymer Science Dictionary, M.S.M., Elsevier Applied Science, London and New York, 1989, page 86".

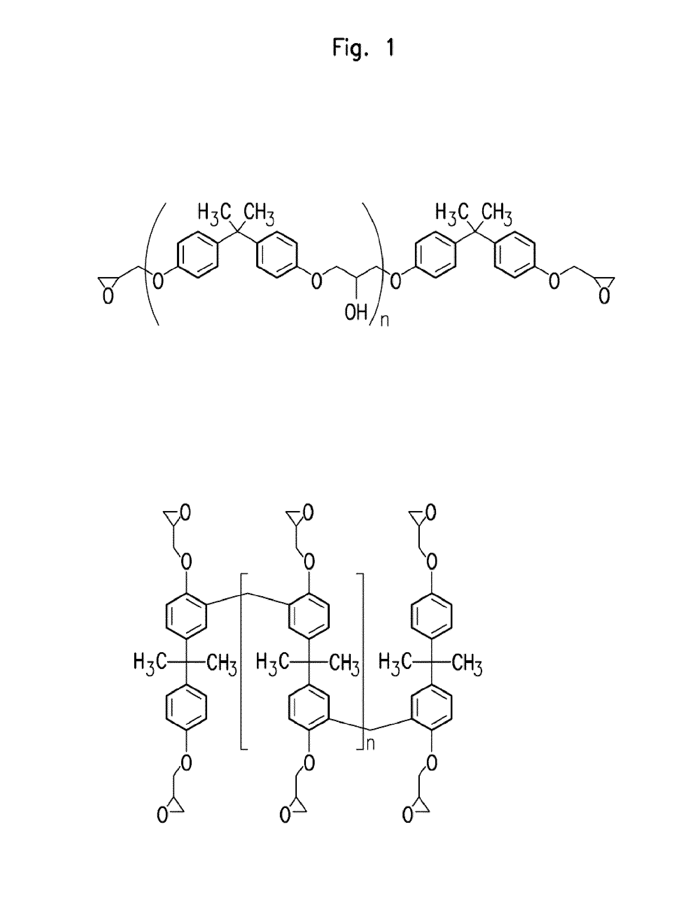

Examples of chemical formulae of epoxy resins are presented in Figure 1, when n is higher than or equal to zero and preferably higher than zero.

In the process according to the invention, the epoxy resin is preferably selected from the group consisting of Type I Grade 1 Classes A to H, Type II Grade 1 Classes A to F and Type VI Grade 1 Class A resins, as defined in the ASTM D 1763 - 00 (2005) standard entitled "Standard Specifications for Epoxy Resins", and any mixture thereof.

In the process according to the invention, the epoxy resin is more preferably a liquid epoxy resin. The expression "liquid epoxy resin" is understood to mean Type I Grade 1 Classes A and B, Type II Grade 1 Classes A, B and C, Type IV Grade 1 Classes A to D, Type V Grade 1 Classes A and B and Type VI Grade 1 Class A resins, as defined in the ASTM D 1763 - 00 (2005) standard entitled "Standard Specifications for Epoxy Resins".

The process for making the epoxy resins can be of any type generating a brine containing sodium chloride such as described in International application WO 2008/152044 of SOLVAY, the content of which is incorporated here by reference especially the passage from page 17, line 23, to page 22, line 19.

By "brine", one intends to denote a aqueous composition comprising at least one salt.

In the process according to the invention, the content of sodium chloride in the generated brine is generally higher than or equal to 10 g per kg of brine, in many cases higher than or equal to 30 g/kg, usually higher than or equal to 70 g/kg, frequently higher than or equal to 100 g/kg, often higher than or equal to 140 g/kg, in particular higher than or equal to 160 g/kg and most specifically higher than or equal to 200 g/kg. The sodium chloride content is usually lower than or equal to 350 g/kg, commonly lower than or equal to 325 g/kg, generally lower than or equal to 270 g/kg, often lower than or equal to 250 g/kg, and frequently lower than or equal to 230 g/kg. A sodium chloride content of about 200 g/kg is particularly convenient.

The generated brine may be unsaturated, saturated or super saturated with the salt.

In the process according to the invention, the generated brine may comprise other compounds besides sodium chloride and water. Those compounds are preferably selected from the group consisting of organic compounds, inorganic compounds, and mixture thereof.

The inorganic compounds are preferably selected from ammonium and metals such as, for example, metals from the families IA, IIA, IVA, VA, VIA, VIIA, IB, IIB and IIIB of the IUPAC nomenclature of the Periodic Table of the Elements, in particular lithium, potassium, rubidium, caesium, calcium, magnesium, strontium, barium, silicon, lead, cobalt, manganese, aluminium, mercury, iron and nickel, and halogens, in particular fluorine, chlorine, bromine and iodine. The content of such compounds in the brine is as described in International application WO 2008/152043 of SOLVAY, the content of which is incorporated here by reference, especially the passage from page 3, line 23, to page 6, line 29.

The organic compounds are preferably selected from organic acids, in particular carboxylic acids, ketones, aldehydes, alcohols, epoxides, chloroalcohols, chlorinated hydrocarbons, ethers and any mixture of at least two of them. More specific organic compounds and their content in the brine are such as described in International application WO 2008/152043 of SOLVAY, the content of which is incorporated here by reference, especially the passage from page 2, line 17, to page 3, line 8, and from page 7, line 16, to page 34. The carboxylic acids are such as described in International application WO 2012/016872 of SOLVAY, the content of which is incorporated here by reference, especially the passage from page 3, line 24, to page 5, line 12.

In the process according to the invention, the generated brine exhibits a Total Organic Carbon (TOC) usually higher than or equal to 0.1 g C/kg, often higher than or equal to 0.5 g C/kg and frequently higher than or equal to 1 g C/kg. That TOC is usually lower than or equal to 20 g C/kg, often lower than or equal to 10 g C/kg and frequently lower than or equal to 5 g C/kg.

The process according to the invention comprises electrolyzing the generated brine containing sodium chloride in order to produce hydrogen, chlorine and sodium hydroxide. The electrolysis process may be a mercury electrolysis, a diaphragm electrolysis, a membrane electrolysis process or a combination thereof. These processes are described in Ullmann's Encyclopedia of Industrial Chemistry, Fifth Completely Revised Edition, Vol. A6 1986, pp. 401-477). The electrolysis process is preferably a membrane electrolysis process.

The various electrolysis processes generally comprise several steps, in addition to the electrolysis step itself, like for instance brine saturation, brine purification by for instance precipitation, filtration, fine purification (ion-exchange), brine pH adjustment, before the electrolysis and brine dechlorination, chlorate, bromate and iodate destruction, and pH adjustment, in the brine recycling loop. Those steps are represented in "Ullmann's Encyclopedia of Industrial Chemistry, Fifth, Completely Revised Edition, Volume A6, 1986, page 407, Figures 9, 10 and 11".

The electrolysis cell for carrying out the electrolysis process can be such as described in Ullmann's Encyclopedia of Industrial Chemistry, Fifth Completely Revised Edition, Vol. A6 1986, pp. 415-419, 427-433 and 441-448).

In the process according to the invention, the brine is preferably electrolyzed in a chlor-alkali membrane cell.

In the process according to the invention, the generated brine usually exhibits a Total Organic carbon and the brine can be submitted to at least one treatment, selected from a physical treatment, a chemical treatment, a biological treatment, and any combination thereof, to reduce its Total Organic Carbon before being submitted to electrolysis. The treatment is usually intended to reduce the Total Organic Carbon of the generated brine before being submitted to electrolysis. A physical treatment, a chemical treatment, or a combination thereof is preferred.

In the process according to the invention, the physical treatment if used, is preferably chosen from the group consisting of dilution, concentration, evaporation, distillation, stripping, extraction and preferably liquid/liquid extraction, decantation, crystallization and adsorption operations, alone or in combination.

In the process according to the invention, the chemical treatment if used, is preferably chosen from the group consisting of electrochemical treatment, chlorinolysis or other chemical oxidation treatment, reduction, neutralization, chelation and precipitation operations, alone or in combination.

In the process according to the invention, the biological treatment if used is preferably chosen from an aerobic and an anaerobic bacterial treatment, alone or in combination.

The various treatments can be as described in International applications of SOLVAY, WO 2008/152043 the content of which is incorporated by reference, more specifically the passage from page 11, line 13, to page 25, line 35, WO 2009/095429 the content of which is incorporated by reference, more specifically the passage from page 1, line 24, to page 27, line 26, WO 2012/016872 the content of which is incorporated by reference, more specifically the passage from page 7, line 20, to page 14, line 6, WO 2012/025468 the content of which is incorporated by reference, more specifically the passage from page 1, line 18, to page 18, line 3, and European patent application of SOLVAY, EP 11194209.0, the content of which is incorporated by reference, more specifically the passage from page 1, line 12, to page 12, line 10.

In the process according to the invention, the treatment if used, preferably comprises at least one stripping operation and one chlorinolysis or other chemical oxidation treatment.

In the process according to the invention, usually at least 50 %, preferably at least 90 %, more preferably at least 95 % and most preferably at least 99 % of the hydrogen produced by the electrolysis of the brine is recycled in the process.

In the process according to the invention, usually at least 50 %, preferably at least 90 %, more preferably at least 95 % and most preferably at least 99 % of the chlorine produced by the electrolysis of the brine is recycled in the process.

In the process according to the invention, usually at least 50 %, preferably at least 90 %, more preferably at least 95 % and most preferably at least 99 % of the sodium hydroxide produced by the electrolysis of the brine is recycled in the process.

In the process according to the invention, usually at least 50 %, preferably at least 90 %, more preferably at least 95 % and most preferably at least 99 % of the hydrogen, of the chlorine and of the sodium hydroxide, produced by the electrolysis of the brine are recycled in the process.

In the process according to the invention, the purity of sodium hydroxide, hydrogen and chlorine, is not critical.

In the process according to the invention, sodium hydroxide is usually produced in the form an aqueous composition, preferably a concentrated aqueous solution or suspension, and more preferably in the form of a concentrated aqueous solution.

The content of sodium hydroxide in the composition produced by electrolysis is usually higher than or equal to 30 % by weight of composition, preferably higher than or equal to 32 % by weight, more preferably higher than or equal to 35 % by weight, and most preferably higher than or equal to 40 % by weight. The content of sodium hydroxide in the composition is usually lower than or equal to 70 % by weight of composition, preferably lower than or equal to 60 % by weight, and most preferably lower than or equal to 50 % by weight.

It might be useful to dilute the said composition before recycling it in the process for manufacturing the epoxy resin according to the invention. In this case, the sodium hydroxide content of solutions or suspensions of sodium hydroxide is generally greater than or equal to 30 g/kg, usually greater than or equal to 40 g/kg, particularly greater than or equal to 60 g/kg, in many cases greater than or equal to 100 g/kg, and preferably greater than or equal to 120 g/kg. This sodium hydroxide content is generally less than or equal to 300 g/kg, commonly less than or equal to 250 g/kg, often less than or equal to 200 g/k and advantageously less than or equal to 160 g/kg. Contents of 125, 130, 135, 140, 145, 150 and 155 g/kg are particularly convenient.

The sodium hydroxide aqueous composition may contain other compounds than sodium hydroxide, selected from the group consisting of organic compounds, inorganic compounds, and mixture thereof. The inorganic compounds can be those selected from the group consisting of sodium chloride, sodium carbonate, sodium sulphate, sodium chlorate, silica, alumina, calcium oxide, magnesium oxide, iron, copper, and mixture thereof.

The sodium hydroxide aqueous composition may in particular contain sodium chloride. This is specifically the case when the generated brine is submitted to a diaphragm electrolysis ("purified caustic brine"). The sodium hydroxide content of the purified caustic brine is generally greater than or equal to 30 g/kg, preferably greater than or equal to 40 g/kg and more preferably greater than or equal to 60 g/kg. This sodium hydroxide content is generally less than or equal to 300 g/kg, preferably less than or equal to 250 g/kg and more preferably less than or equal to 200 g/kg. The sodium chloride content of the purified caustic brine is generally greater than or equal to 30 g/kg, preferably greater than or equal to 50 g/kg and more preferably greater than or equal to 70 g/kg. This sodium chloride content is generally less than or equal to 250 g/kg, preferably less than or equal to 200 g/kg and more preferably less than or equal to 180 g/kg.

The Total Organic Carbon of the sodium hydroxide aqueous composition expressed as elemental carbon (C) per 1 of composition is usually lower than or equal to 5 g C/1, preferably lower than or equal to 2 g C/1, more preferably lower than or equal to 1 g C/1, and most preferably lower than or equal to 0.1 g C/1. The Total Organic Carbon of the sodium hydroxide aqueous composition is usually higher than or equal to 0.0001g C/1 of composition, often higher than or equal to 0.001 g C/1, frequently higher than or equal to 0.01 g C/1, and in particular higher than or equal to 0.05 g C/1.

In the process according to the invention, the hydrogen produced by the electrolysis exhibits a purity which is usually higher than or equal to 95 % by weight, often higher than or equal to 99.5 % by weight, frequently higher than or equal to 99.9 % by weight, and in particular higher than or equal to 99.99 % by weight. The hydrogen purity is usually lower than or equal to 99.9999 % by weight.

In the process according to the invention, the hydrogen produced by the electrolysis may contain impurities, selected from the group consisting of nitrogen, mercury, and any mixture thereof.

In the process according to the invention, the chlorine produced by the electrolysis exhibits a purity which is usually higher than or equal to 95 % by weight, often higher than or equal to 99.5 % by weight, frequently higher than or equal to 99.9 % by weight, and in particular higher than or equal to 99.99 % by weight. The hydrogen purity is usually lower than or equal to 99.9999 % by weight.

In the process according to the invention, the chlorine produced by the electrolysis may contain impurities, selected from the group consisting of oxygen, nitrogen, carbon dioxide, hydrogen, chloromethanes, and any mixture thereof.

In a first embodiment, the process according to the invention, preferably comprises reacting dichloropropanol, a compound containing at least one active hydrogen atom and sodium hydroxide in order to produce the epoxy resin and the brine.

In one preferred aspect of that embodiment, at least one part of the sodium hydroxide used for producing the epoxy resin, has been produced by the electrolysis of the brine. In that preferred aspect, it is preferred that at least 50 %, preferably at least 90 %, more preferably at least 95 % and most preferably at least 99 % of the sodium hydroxide used for producing the epoxy resin, has been produced by the electrolysis of the brine. In a more preferred aspect substantially all the sodium hydroxide used for producing the epoxy resin has been produced by the electrolysis of the brine. The part of the sodium hydroxide that possibly has not been obtained by the electrolysis of the brine generated in the process for manufacturing the epoxy resin according to the invention, may come from any other sources, including the electrolysis of brines generated in other processes like for instance, processes for manufacturing epoxides, preferably ethylene oxide, propylene oxide, butylene oxide or epichlorohydrin, processes for manufacturing chlorinated organic compounds, preferably dichloroethane, processes for manufacturing mono- and polyisocyanates, preferably 4,4'-methylenediphenyl diisocyanate (MDI) or toluene diisocyanate (TDI) or hexamethylen-1,6-diisocyanate (HDI) and the processes for manufacturing polycarbonates, in particular 2,2-bis(4-hydroxyphenyl)propane polycarbonate (bisphenol A polycarbonate).

In one variant of that preferred aspect, at least one fraction of the dichloropropanol has been obtained by reacting glycerol and hydrogen chloride, and at least one part of the hydrogen chloride has been obtained by reacting the chlorine and the hydrogen obtained in the electrolysis of the brine.

The hydrogen chloride may be in the form of a gas or of an aqueous solution of hydrogen chloride or of a mixture of the two, preferably in the form of a gas or of a mixture of a gas and of an aqueous solution of hydrogen chloride.

In that variant, it is preferred that at least 50 %, preferably at least 90 %, more preferably at least 95 % and most preferably at least 99 % of the hydrogen chloride used for producing the dichloropropanol, has been obtained by reacting the chlorine and the hydrogen obtained in the electrolysis of the brine. In a more preferred aspect substantially all the hydrogen chloride used for producing the dichloropropanol has been produced by the electrolysis of the brine. The part of the hydrogen chloride that possibly has not been obtained by reacting the chlorine and the hydrogen obtained in the electrolysis of the brine generated in the process for manufacturing the epoxy resin according to the invention, may come from any other sources, like for instance, in the manufacture of vinyl chloride, of mono- and polyisocyanates, preferably 4,4'-methylenediphenyl diisocyanate (MDI) or toluene diisocyanate (TDI) or hexamethylen-1,6-diisocyanate (HDI), of allyl chloride, of chloromethanes, of silica, e.g by flame hydrolysis of silicon tetrachloride, of chlorohydrofluorocarbons, e.g. by hydrodechlorination of chlorofluorcarbons, of hydrofluorocarbons, e.g. by hydrodechlorination of chlorofluorcarbons and/or chlorohydrofluorcarbons, or in the chlorinolysis of organic compounds, or by high temperature oxidation of chlorinated organic compounds.

In this first embodiment of the process according to the invention, by dichloropropanol, one intends to denote any one of 1,3-dichloropropane-2-ol, 2,3-dichloropropane-1-ol, and mixture thereof. Mixtures consisting essentially of 1,3-dichloropropane-2-ol and 2,3-dichloropropane-1-ol are preferred. In the mixture of 1,3-dichloropropane-2-ol and 2,3-dichloropropane-1-ol, the 1,3-dichloro-2-propanol content with respect to the total content of the two dichloropropanol isomers is preferably higher than or equal to 100 g/kg, yet preferably higher than or equal to 300 g/kg, still preferably higher than or equal to at least 400 g/kg, more preferably higher than or equal to 750 g/kg, still more preferably higher than or equal to 800 g/kg, yet more preferably higher than or equal to 900 g/kg, and most preferably higher than or equal to 920 g/kg. This content of 1,3-dichloro-2-propanol in the mixture is generally at most 990 g/kg and usually at most 960 g/kg. Contents of 925, 930, 935, 940, 945, 950 or 955 g/kg are particularly convenient. It is also possible to use a dichloropropanol composed essentially of 1,3-dichloro-2-propanol.

In that variant, it is preferred that at least 50 %, preferably at least 90 %, more preferably at least 95 % and most preferably at least 99 % of the dichloropropanol, has been obtained by reacting glycerol and hydrogen chloride. In a more preferred aspect substantially all the dichloropropanol used for producing the epoxy resin has been produced by reacting glycerol and hydrogen chloride. The part of the dichloropropanol that possibly has not been obtained by reacting glycerol and hydrogen chloride may be derived from several processes such as, for example, the allyl chloride hypochlorination process, the allyl alcohol chlorination process, the glycerol hydrochlorination process, the glycerol monochlorohydrin hydrochlorination process, the epichlorohydrin hydrochlorination process, the 2,3-dichloropropionaldehyde hydrogenation process as described in documents WO 1997/48667, US 6,350,922 and US 5,744,655, the 1,2-dichlorethylene hydroformylation process as described in document WO 2005/116004, the 1,3-dichloroacetone hydrogenation process as described in documents WO 2005/097722 and WO 2003/064357. 2,3-dichloropropionaldehyde may itself be obtained by chlorination of acrolein and/or hydroformylation of 1,2-dichloroethylene as described in documents US 2,860,146 and WO 2005/116004. 1,3-dichloroacetone may itself be obtained by chlorination of acetone and/or by bromine/chlorine exchange starting from 1,3-dibromoacetone as described in Applications WO 2005/097722 and WO 2005/115954. Acrolein may be obtained by selective oxidation of propylene. 1,2-dichloroethylene may be a by-product of the synthesis of vinyl chloride starting from ethane and/or be obtained by chlorination of acetylene. Acetylene may be obtained by conventional processes such as hydrolysis of calcium carbide and/or pyrolysis of hydrocarbons, crude oil and even coal, such as described in "Industrial Organic Chemistry, Third, Completely Revised Edition, VCH, 1997, pp. 93-98". 1,3-dibromoacetone may be obtained by bromination of acetone, as described in document WO 2005/115954. Acetone may itself be obtained by conventional processes, such as, for example, oxidation of propylene, dehydrogenation of isopropanol and/or decomposition of cumene hydroperoxide, as described in "Industrial Organic Chemistry, Third, Completely Revised Edition, VCH, 1997, pp. 276-277 and 347-355".

In that variant, the dichloropropanol is preferably obtained by reaction between glycerol and a chlorinating agent as described in Patent Applications WO 2005/054167, WO 2006/100311, WO 2006/100312, WO 2006/100313, WO 2006/100314, WO 2006/100315, WO 2006/100316, WO 2006/100317, WO 2006/106153, WO 2007/054505, WO 2006/100318, WO 2006/100319, WO 2006/100320, WO 2006/106154, WO 2006/106155, WO 2007/144335, WO 2008/107468, WO 2008/101866, WO 2008/145729, WO 2008/110588, WO 2009/000773, WO 2009/043796, WO 2009/121853, WO 2009/077528, WO 2010/066660, WO 2010/029039 and WO 2010/029153, filed in the name of SOLVAY, the contents of which are incorporated herein by reference.

In that variant, the glycerol may be obtained from fossil or renewable raw materials. It is preferred to use glycerol obtained from renewable materials. A glycerol which is particularly suitable may be obtained during the conversions of fats or oils of vegetable or animal origin, such as saponification, transesterification or hydrolysis reactions. A particularly suitable glycerol may be obtained during the conversion of animal fats. Another particularly suitable glycerol may be obtained during the manufacture of biodiesel. Another particularly suitable glycerol may be obtained during the fatty acid manufacture. Another particularly suitable glycerol may be obtained during the fatty alcohols manufacture.

In that variant of the process according to the invention, the dichloropropanol has preferably been obtained by hydrochlorination of glycerol obtained from renewable raw materials.

In that variant of the process according to the invention, the dichloropropanol exhibits usually a purity higher than 90 % by weight, preferably higher than or equal to 95 % by weight, more preferably higher than or equal to 99 % by weight and most preferably higher than or equal to 99.9 % by weight.

In that variant of the process according to the invention, the compound containing at least one active hydrogen atom can be of any type. This compound may have been obtained from renewable raw materials, fossil raw materials and any combination thereof. This compound is preferably obtained from renewable raw materials.

The compound containing at least one active hydrogen atom is preferably selected from the group consisting of a polyol, a polycarboxylic acid, a polyamine, an amino alcohol, a polyimide, a polyamide, a polyaminoamide, a polyimine, an acid mono- or polyphenol and mixtures of at least two of these compounds.

In the process according to the invention, the compound containing at least one active hydrogen atom is more preferably a polyol selected from the group constituted of bisphenol A (4,4'-dihydroxy-2,2-diphenylpropane, 4,4'-isopropylidenediphenol), tetrabromobisphenol A (4,4'-isopropylidenebis(2,6-dibromophenol)), bisphenol AF (4,4'-[2,2,2-trifluoro-1-(trifluoromethyl)ethylidene]bisphenol), hexafluorobisphenol A (4,4'-dihydroxy-2,2-diphenyl-1,1,1,3,3,3-hexafluoropropane), 1,1,2,2-tetra(p-hydroxyphenyl)ethane, tetramethylbisphenol (4,4'-dihydroxy-3,3',5,5'-tetramethyl bisphenol), 1,5-dihydroxynaphthalene, 1,1',7,7'-tetrahydroxydinaphthylmethane, 4,4'-dihydroxy-α-methylstilbene, a condensation product of bisphenol A with formaldehyde (bisphenol A novolac), a condensation product of phenol with formaldehyde, preferably bisphenol F (mixture of o,o', o,p' and p,p' isomers of dihydroxydiphenylmethane), a condensation product of cresol with formaldehyde (mixture of o,o', o,p' and p,p' isomers of methylhydroxydiphenylmethane), an alkylation product of phenol and of dicyclopentadiene (2,5-bis[hydroxyphenyl]octahydro-4,7-methano-5H-indene), a condensation product of phenol and of glyoxal (tetrakis(4-hydroxyphenyl)ethane), a condensation product of phenol and of a hydroxybenzaldehyde (e.g. tris(4-hydroxyphenyl)methane), 1,1,3-tris(p-hydroxyphenyl)propane, and mixtures of at least two of them, or p-aminophenol.

In the process according to the invention, the compound containing at least one active hydrogen atom is also more preferably a polyol, preferably containing more than three carbon atoms, selected from the group consisting of a polyphenol, a sugar, a polyol derived from a sugar, an acid polyphenol, any derivative thereof, and any mixture thereof. The polyol may be as described in international application EP2011/066689 filed in the name of SOLVAY S.A., the content of which is incorporated herein by reference, more specifically the passages from page 12, line 5, to page 16, line 13.

In the process according to the invention, when the polyol is a product derived from a sugar, the product derived from a sugar is preferably selected from the group consisting of an anhydrosugar, a reduction product from sugar, a reduction product of hydroxymethylfurfural, a difuran derivative of furfural and any mixture thereof.

In the process according to the invention, when the product derived from a sugar is an anhydrosugar, it is preferably selected from the group consisting of isosorbide, isomannide, isoidide and any mixture thereof. The anhydrosugar is more preferably isosorbide.

In the first embodiment of the process according to the invention, epichlorohydrin may be generated in situ during the reaction generating the epoxy resin and the brine, and the process preferably comprises recovering at least one part of the epichlorohydrin and recycling at least one farction the recovered epichlorohydrin to the reaction for producing the epoxy resin. The process may comprise at least one liquid-liquid phase separation step to remove at least one portion of the epichlorohydrin formed in situ.

In the process according to the invention, at least one of the compound containing at least one active hydrogen atom, of the dichloropropanol, of the epichlorohydrin and of the basic agent, has preferably been obtained from renewable raw materials.

In the process according to the invention, by epichlorohydrin formed in situ, one intends to denote epichlorohydrin which is formed during the reaction and which is sufficiently stable to accumulate in the reaction medium. This epichlorohydrin can be detected in the reaction medium and possibly isolated from said reaction mixture. The detection can be carried out by any type of analysis, like gas chromatography for instance. The isolation can be carried out by any separation method like evaporation for instance. Epichlorohydrin which is consumed as soon as it formed does not comply with the previous requirements for epichlorohydrin formed in situ.

In another embodiment, the process according to the invention may be part of an integrated process, comprising treating the brine to reduce its Total Organic Carbon, electrolyzing the treated brine to produce hydrogen, chlorine and the caustic soda, reacting the hydrogen and the chlorine to produce hydrogen chloride, and reacting the hydrogen chloride with glycerol to produce the dichloropropanol. In that case, it is preferred that at least one part of the hydrogen chloride has been obtained by reacting hydrogen and chlorine, in a molar ratio between hydrogen and chlorine lower than or equal to 1. In that case, it is also preferred that the molar ratio between the hydrogen chloride consumed in the process, and the sodium chloride generated in the process, expressed as elemental chlorine (Cl) is higher than or equal to 0.9. In that case, it is most preferred that at least one part of the hydrogen chloride has been obtained by reacting hydrogen and chlorine, in a molar ratio between hydrogen and chlorine lower than or equal to 1, and that the molar ratio between the hydrogen chloride consumed in the process, and the sodium chloride generated in the process, expressed as elemental chlorine (Cl) is higher than or equal to 0.9.

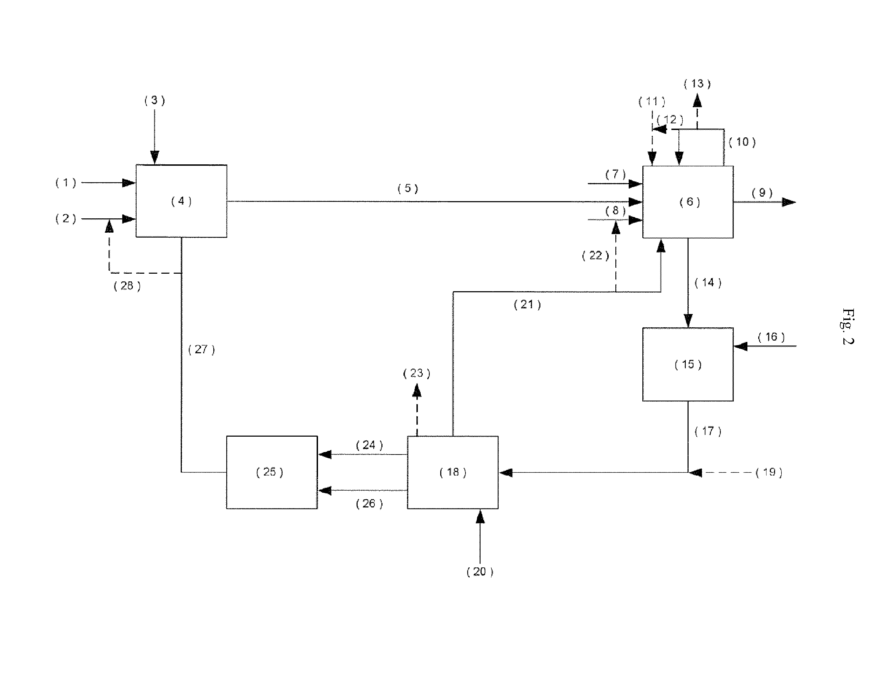

Figure 2 represents a non-limiting embodiment of the process according to the present invention.

A first stream of glycerol, preferably obtained from renewable raw materials, is fed to a first vessel (4) via a first line (1). A second stream of hydrogen chloride, gaseous, as an aqueous solution or a mixture thereof, is fed to first vessel (4) via a second line (2). A third stream of a catalyst, preferably a carboxylic acid is fed to first vessel (4) via a third line (3). First vessel (4) may comprise any combination of reactors and separation equipment. A fourth stream of dichloropropanol is withdrawn from first vessel (4) via a fourth line (5) and is fed to a second vessel (6). Also introduced in second vessel (6) are a fifth stream of a compound containing at least one active hydrogen atom via a fifth line (7) and a sixth stream of sodium hydroxide via a sixth line (8). A seventh stream of epoxy resin is withdrawn from second vessel (6) via a seventh line (9) which may be sent to storage, to further processing such as purification, or to other equipment for further reaction. An eight stream of epichlorohydrin formed in situ in second vessel (6) is withdrawn from second vessel (6) and recycled to second vessel (6) via an eighth line (10). A ninth stream of epichlorohydrin not formed in second vessel (6) may also be fed to second vessel (6) via a ninth line (11). Part of the eighth stream of epichlorohydrin may be added as a tenth stream to the ninth stream of epichlorohydrin via a tenth line (12). Part of the eight stream of the recycled epichlorohydrin may be withdrawn as an eleventh stream via a eleventh line (13) and may be sent to storage, to further processing such as purification, or to other equipment for further reaction. A twelfth stream of brine is withdrawn from second vessel (6) via a twelfth line (14) and fed to a third vessel (15). Third vessel (15) is also fed with a thirtheenth stream containing an oxidant, preferably "active chlorine" via a thirtheenth line (16). The expression "active chlorine" is understood to mean molecular chlorine and its reaction products with water, chloride ions or with a basic agent, such as hypochlorous acid, trichloride ion and sodium hypochlorite for example. A fourtheenth stream of brine is withdrawn from third vessel (16) via a fourtheenth line (17) and fed to a fourth vessel (18). A fifteenth stream of brine may be supplied via a fifteenth line (19). Also supplied to fourth vessel (18) is a sixteenth stream of electricity via a sixteenth line (20). A seventeenth stream of sodium hydroxide is withdrawn from fourth vessel (18) via a seventeenth line (21) and fed to second vessel (6). Part of the seventeenth stream of sodium hydroxide may be added as an eighteenth stream to the sixth stream of sodium hydroxide via a eighteenth line (22). A part of the seventeenth stream of sodium hydroxide may be withdrawn as a nineteenth stream via a nineteenth line (23). A twentieth stream of hydrogen is withdrawn from fourth vessel (18) via a twentieth line (24) and fed to a fifth vessel (25). Also withdrawn from fourth vessel (18) and fed to fifth vessel (25) is a twenty-first stream of chlorine via an twenty-first line (26). A twenty-second stream of hydrogen chloride is withdrawn from fifth vessel (25) and fed to first vessel (4) via a twenty-second line (27). Part of the twenty-second stream of hydrogen chloride may be added to the second stream of hydrogen chloride as a twenty-third stream via a twenty-third line (28).

Vessels (4), (6), (15), (18) and (25) contain reaction vessel of any well-known suitable type, including for example, one or more discontinuous or continuous reactors, and separation vessel of any well-known suitable type, including for example, one or more distillation columns, evaporators, strippers, settlers, adsorbers, absorbers, ion exchange equipments or combination thereof.

More specifically, vessel (18) contains any type of well-known electrolysis suitable cells, including for example, mercury, diaphragm and membrane chlor-alkali electrolysis cells.

## Claims

1. Process for manufacturing an epoxy resin, wherein a brine containing sodium chloride is generated in the said process, comprising electrolyzing said brine in order to produce hydrogen, chlorine and sodium hydroxide, and recycling at least one part of said hydrogen, chlorine and sodium hydroxide in the said process.

2. Process according to claim 1 wherein the brine contains sodium chloride in an amount higher than or equal to 10 g/kg.

3. Process according to claim 1 or 2, wherein the brine is electrolyzed in a chlor-alkali membrane cell.

4. Process according to any one of claims 1 to 3, wherein the brine exhibits a Total Organic carbon and wherein said brine has been submitted to at least one treatment, selected from a physical treatment, a chemical treatment, a biological treatment, and any combination thereof, to reduce its Total Organic Carbon before being submitted to electrolysis and in which the physical treatment if used, is preferably chosen from dilution, concentration, evaporation, distillation, stripping, extraction preferably liquid/liquid extraction, decantation, crystallization and adsorption operations, alone or in combination, the chemical treatment if used, is preferably chosen from electrochemical treatment, chlorinolysis or other chemical oxidation treatment, reduction, neutralization, chelation and precipitation operations, alone or in combination, and the biological treatment if used is preferably chosen from an aerobic and an anaerobic bacterial treatment, alone or in combination.

5. Process according to any one of claims 1 to 4, wherein sodium hydroxide is obtained as an aqueous solution containing more than 30 per cent by weight of sodium hydroxide.

6. Process according to any one of claims 1 to 5, wherein at least 95 % of the hydrogen, 95 % of the chlorine and 95 % of the sodium hydroxide produced by the electrolysis are recycled in the process.

7. Process according to any one of claims 1 to 6, comprising reacting dichloropropanol, a compound containing at least one active hydrogen atom and sodium hydroxide in order to produce the epoxy resin and the brine, and wherein at least one part of the sodium hydroxide has been produced by the electrolysis of the brine.

8. Process according to claim 7, wherein at least one fraction of the dichloropropanol has been obtained by reacting glycerol and hydrogen chloride, and wherein at least one part of the hydrogen chloride has been obtained by reacting the chlorine and the hydrogen obtained in the electrolysis of the brine.

9. Process according to claim 8, wherein the at least one part of the hydrogen chloride has been obtained by reacting hydrogen and chlorine, in a molar ratio between hydrogen and chlorine lower than or equal to 1.

10. Process according to claim 8 or 9, wherein the molar ratio between the hydrogen chloride consumed in the process, and the sodium chloride generated in the process, expressed as elemental chlorine (Cl) is higher than or equal to 0.9.

11. Process according to any one of claims 7 to 10, wherein epichlorohydrin is generated in situ during the reaction generating the epoxy resin and the brine, preferably comprising recovering at least one part of the epichlorohydrin and recycling at least one fraction of the recovered epichlorohydrin to the reaction for producing the epoxy resin.

12. Process according to claim 11, comprising at least one liquid-liquid phase separation step to remove at least one part of the epichlorohydrin formed in situ.

13. Process according to any one of claims 1 to 12, wherein the epoxy resin is selected from the group consisting of Type I Grade 1 Classes A to H, Type II Grade 1 Classes A to F and Type VI Grade 1 Class A resins, as defined in the ASTM D 1763 - 00 (2005) standard entitled "Standard Specifications for Epoxy Resins", and any mixture thereof and wherein the epoxy resin is preferably a liquid epoxy resin selected from the group consisting of Type I Grade 1 Classes A and B, Type II Grade 1 Classes A, B and C and Type VI Grade 1 Class A resins, as defined in the ASTM D 1763 - 00 (2005) standard entitled "Standard Specifications for Epoxy Resins" and any mixture thereof.

14. Process according to any one of claims 7 to 13 wherein the compound containing at least one active hydrogen atom is a polyol selected from the group constituted of bisphenol A (4,4'-dihydroxy-2,2-diphenylpropane, 4,4'-isopropylidenediphenol), tetrabromobisphenol A (4,4'-isopropylidenebis(2,6-dibromophenol)), bisphenol AF (4,4'-[2,2,2-trifluoro-1-(trifluoromethyl)ethylidene]bisphenol), hexafluorobisphenol A (4,4'-dihydroxy-2,2-diphenyl-1,1,1,3,3,3-hexafluoropropane), 1,1,2,2-tetra(p-hydroxyphenyl)ethane, tetramethylbisphenol (4,4'-dihydroxy-3,3',5,5'-tetramethyl bisphenol), 1,5-dihydroxynaphthalene, 1,1',7,7'-tetrahydroxydinaphthylmethane, 4,4'-dihydroxy-α-methylstilbene, a condensation product of bisphenol A with formaldehyde (bisphenol A novolac), a condensation product of phenol with formaldehyde, preferably bisphenol F (mixture of o,o', o,p' and p,p' isomers of dihydroxydiphenylmethane), a condensation product of cresol with formaldehyde (mixture of o,o', o,p' and p,p' isomers of methylhydroxydiphenylmethane), an alkylation product of phenol and of dicyclopentadiene (2,5-bis[hydroxyphenyl]octahydro-4,7-methano-5H-indene), a condensation product of phenol and of glyoxal (tetrakis(4-hydroxyphenyl)ethane), a condensation product of phenol and of a hydroxybenzaldehyde (e.g. tris(4-hydroxyphenyl)methane), 1,1,3-tris(p-hydroxyphenyl)propane, and mixtures of at least two of them, or p-aminophenol or is a polyol selected from the group consisting of a polyphenol, a sugar, a polyol derived from a sugar, preferably isosorbide, isomannide, isoidide and any mixture thereof, an acid polyphenol, any derivative thereof, and any mixture thereof.

15. Process according to any one of claims 7 to 14, wherein at least one of the dichloropropanol and of the compound containing at least one active hydrogen atom, has been obtained from renewable raw materials.
